Europäisches Patentamt

European Patent Office

Office européen des brevets

(19)

(11) **EP 0 735 383 A1**

(12) # DEMANDE DE BREVET EUROPEEN

(43) Date de publication:
02.10.1996 Bulletin 1996/40

(51) Int Cl.⁶: **G01S 17/93**

(21) Numéro de dépôt: 96400607.6

(22) Date de dépôt: 22.03.1996

(84) Etats contractants désignés:
DE ES GB IT

(30) Priorité: 29.03.1995 FR 9503671

(71) Demandeur: REGIE NATIONALE DES USINES
RENAULT S.A.
F-92109 Boulogne Billancourt (FR)

(72) Inventeurs:
• Baravian, Laurent
92800 Puteaux (FR)

• Hamidi, Massoud
92380 Garches (FR)

(74) Mandataire: Fernandez, Francis Lionel et al
Régie Nationale des Usines Renault SA
Service 0267 - Bâtiment J2
860, Quai de Stalingrad
B.P. 103
92109 Boulogne Billancourt (FR)

(54) **Dispositif de détection et/ou de localisation d'un véhicule**

(57)     L'invention propose un dispositif de détection et/ou de localisation d'un véhicule ou obstacle voisin (43), porté par une paroi d'un véhicule automobile et comportant un capteur constitué d'un émetteur émettant un rayonnement infrarouge ou autres sensiblement perpendiculairement à ladite paroi du véhicule porteur et d'un récepteur, caractérisé en ce que le lobe (41) de détection du dispositif, c'est-à-dire la zone du véhicule cible dont le récepteur reçoit le rayonnement réfléchi et diffusé, est de forme allongée verticalement et de faible épaisseur horizontale. Le dispositif comporte un télémètre dont le rôle est de cartographier l'espace latéral pendant le déplacement du véhicule porteur, la mesure de distance latérale permettant, entre autres, de déterminer précisément la position des extrémités des véhicules sur un axe longitudinal.

Application à la recherche de places de stationnement.

FIG.2

41

40

−43−

Printed by Jouve, 75001 PARIS (FR)

## Description

La présente invention concerne un dispositif de détection et/ou de localisation d'un véhicule ou obstacle voisin, porté par une paroi d'un véhicule automobile et comportant un capteur constitué d'un émetteur émettant un rayonnement infrarouge, ou autre, sensiblement perpendiculairement à ladite paroi du véhicule porteur et d'un récepteur.

Un tel dispositif est utilisé en particulier pour déterminer la position de véhicules stationnant en ligne le long d'un trottoir. Dans ce cas, ce dispositif est fixé sur un côté du véhicule porteur de manière à viser avec un faisceau de rayonnement infrarouge, ou autre, (radar, etc.) perpendiculairement à l'axe longitudinal du véhicule porteur et il détecte, pendant que le véhicule porteur circule le long des véhicules en stationnement, l'extrémité avant d'un véhicule et l'extrémité arrière du véhicule suivant, la distance entre ces deux véhicules étant mesurée par un capteur odométrique.

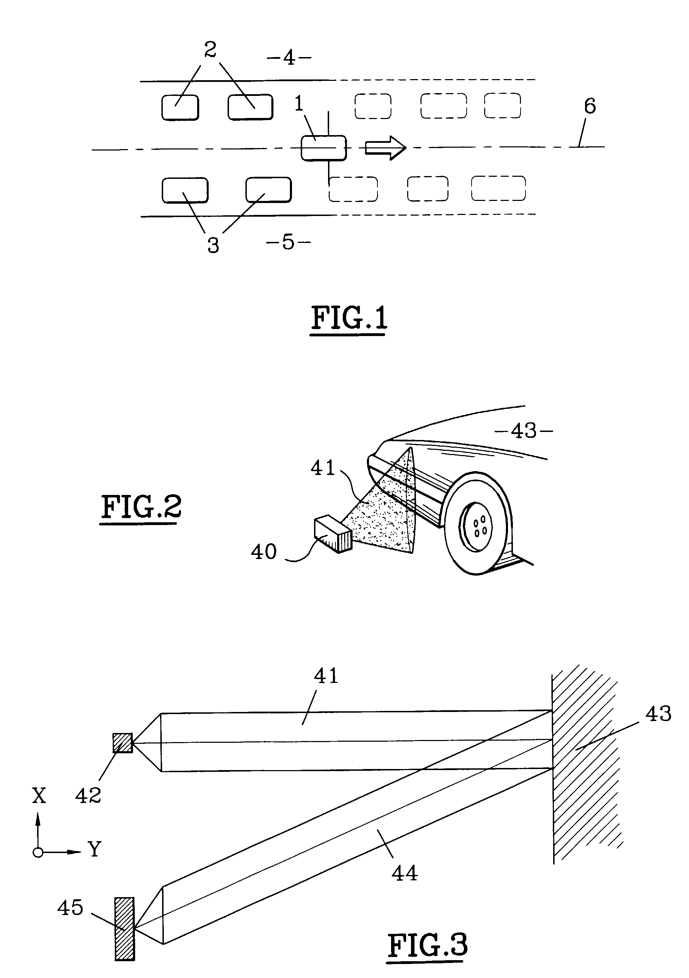

Ceci est schématisé sur la figure 1 sur laquelle on voit un véhicule 1 portant des dispositifs de détection implantés sur ses parois latérales et qui circule le long de files de véhicules 2 et 3 garés en créneau le long des trottoirs 4 et 5.

Les dispositifs de détection visent les véhicules 2 et 3 perpendiculairement à l'axe longitudinal 6 du véhicule 1. L'algorithme de détection est basé sur un histogramme qui prend en compte les échos et l'abscisse longitudinale mesurée selon l'axe 6 du véhicule 1 à laquelle ils ont été reçus grâce au capteur odométrique de manière à établir une cartographie précise des véhicules 2 et 3 afin d'indiquer au conducteur du véhicule 1 un emplacement susceptible de recevoir son véhicule.

Le brevet européen EP-B1-0.305.907 décrit un dispositif de mesure de créneau par un ou plusieurs capteurs à rayonnement infrarouge, ou autre, dont les axes sont perpendiculaires à l'axe longitudinal du véhicule porteur et qui, au moyen d'un histogramme de présence/absence de signal reçu corrélé à la mesure du déplacement du véhicule, permet d'évaluer la distance qui sépare deux véhicules en stationnement.

Ce dispositif connu ne permet pas d'espérer une précision suffisante à l'exploitation d'une telle prestation. En effet, d'une part il faut tenir compte de la disparité des hauteurs des pare-chocs qui constituent les parties extrêmes des véhicules selon leur axe longitudinal et présentent des dimensions verticales restreintes si bien qu'un faisceau faiblement ou pas du tout divergent dans la direction verticale pourrait ne pas détecter certains pare-chocs de véhicules cibles et, donc, fournir de fausses indications sur la longueur exacte des créneaux. D'autre part, il faut tenir compte du fait que les véhicules cibles ne présentent pas des coins carrés mais arrondis, ce qui, avec ce dispositif connu, ne permet pas d'évaluer, au moyen de capteurs à coût modéré (ce qui est souhaitable pour l'industrie automobile), la dimension d'un emplacement de stationnement avec une précision inférieure à quelque dizaines de centimètres.

La présente invention a pour but de fournir un dispositif de détection et/ou de localisation d'un véhicule ou d'un obstacle voisin du type précité qui permet d'éliminer les inconvénients précités.

Le dispositif selon l'invention est notamment remarquable en ce que le lobe de détection du récepteur, c'est-à-dire la zone du véhicule cible dont le récepteur reçoit le rayonnement réfléchi et diffusé, est de forme allongée verticalement et de faible épaisseur horizontale, la hauteur de ce lobe de réception étant au moins égale à quelques dizaines de centimètres lorsque la distance en direction transversale entre le véhicule cible et le véhicule porteur est égale à environ 2 m.

Grâce à cette disposition, on peut détecter des obstacles dont la hauteur peut varier dans de grandes proportions. Par ailleurs, la faible largeur du faisceau permet d'améliorer la précision de la localisation des pare-chocs sur l'axe longitudinal.

Selon une autre caractéristique de l'invention, le dispositif comporte un télémètre mesurant la distance latérale entre le véhicule porteur et le véhicule cible et l'on effectue une correction de la position du véhicule cible sur l'axe longitudinal en fonction de ladite distance latérale.

Ce télémètre est destiné à cartographier l'espace latéral au véhicule. La mesure de la distance latérale à l'obstacle vise à déterminer avec précision la position des extrémités des véhicules stationnés sur l'axe longitudinal.

Ceci permet d'améliorer encore la précision de la mesure, ce qui est particulièrement important pour la détermination de la longueur d'un emplacement de stationnement.

Selon un mode de réalisation de l'invention, l'émetteur est conformé pour émettre un faisceau divergent selon la direction verticale et convergent parallèle, ou faiblement divergent selon la direction verticale.

Selon un autre mode de réalisation de l'invention, le récepteur est conformé pour recevoir un faisceau vertical de faible largeur horizontale.

L'émetteur ou le récepteur peut comporter un élément unique de symétrie circulaire associé à une optique astigmatique. Il peut également être constitué par un élément de forme allongée ou par une juxtaposition de plusieurs éléments dans le plan vertical et une optique non astigmatique.

Selon une autre caractéristique de l'invention, la hauteur du lobe de détection est égale à environ 50 cm, à 2 m de distance.

Selon encore une autre caractéristique de l'invention, le lobe de détection est situé à une hauteur par rapport au sol comprise entre environ 30 cm et 80 cm, à 2 m de distance.

Ceci permet de détecter les pare-chocs, c'est-à-dire la partie la plus saillante, de tous les types de véhicule.

Selon encore une autre caractéristique de l'invention, le dispositif comporte un dispositif éliminant les objets dont la distance est supérieure à une valeur prédéterminée, ce qui permet au système d'être insensible à l'arrière-plan.

L'invention a également pour objet un dispositif de détection et/ou de localisation destiné à déterminer la position de l'extrémité de véhicules stationnant en ligne le long d'un trottoir, caractérisé en ce qu'il est fixé sur un côté du véhicule porteur de manière à viser avec un faisceau de rayonnement dont l'axe est orthogonal à l'axe longitudinal du véhicule porteur, en ce que la valeur prédéterminée de la distance correspond à la largeur d'un véhicule, par exemple deux mètres, et en ce qu'il comporte un capteur odométrique et un dispositif de calcul déterminant la longueur des emplacements libres pour le garage du véhicule porteur.

Selon une autre caractéristique de l'invention, ce dispositif comporte un dispositif de calcul de l'erreur de mesure de la position de l'extrémité des véhicules en fonction de la distance du véhicule détecté.

Ceci permet d'obtenir une bonne précision en prenant en compte l'erreur due à la courbure des parechocs, ce qui est particulièrement important dans le cas de la recherche d'un emplacement de stationnement car les emplacements libres sont souvent rares et il est important de ne pas éliminer des places disponibles du fait de l'erreur de mesure de la longueur de l'emplacement disponible.

D'autres caractéristiques et avantages de l'invention ressortiront de la description qui suit d'un exemple de réalisation, faite en se référant aux dessins ci-annexés dans lesquels :

- La figure 1 illustre l'utilisation d'un dispositif selon l'invention pour la recherche d'emplacements de stationnement ;
- la figure 2 illustre un mode de réalisation pour l'obtention de la forme spécifique scrutée sur un véhicule voisin par un dispositif de détection selon l'invention ;
- la figure 3 est un schéma de principe du dispositif selon l'invention ;
- la figure 4 illustre l'erreur de mesure due à la mauvaise détection des pare-chocs ;
- la figure 5 montre l'influence de la distance au véhicule cible sur la qualité de la détection des pare-chocs ;
- la figure 6 montre l'influence de la distance sur l'erreur de mesure ;
- la figure 7 représente un dispositif de mesure de distance par triangulation ;
- la figure 8 représente un dispositif de mesure de distance par triangulation avec discrimination angulaire par l'émission.

Le dispositif de détection représenté sur les figures 2 à 8 est destiné à la recherche d'emplacements de stationnement comme cela a été décrit précédemment en se référant à la figure 1.

La figure 2 illustre le premier mode de réalisation concernant la mise en forme de la zone d'observation sur le véhicule à détecter. Elle représente le faisceau lumineux 41 émis par un capteur 40. Le faisceau présente une section allongée d'axe vertical de telle sorte que la trace de ce faisceau sur un véhicule 43 proche du véhicule porteur soit elle-même allongée verticalement mais étroite selon l'axe horizontal. La trace du faisceau présente une hauteur suffisamment élevée pour pouvoir détecter le pare-chocs quelle que soit sa position par rapport au sol et une largeur la plus faible possible pour augmenter la précision de la détection selon la direction longitudinale du véhicule porteur et, part suite, la précision de la détermination de la position de l'extrémité avant ou arrière du véhicule 43. En résumé on émet un faisceau fin présentant une grande hauteur.

Une telle forme de faisceau peut être obtenue par des moyens optiques simples connus de l'homme de l'art à partir d'une source unique ou de plusieurs sources. A titre d'exemple, on peut citer une première méthode qui consiste à partir d'une source unique de symétrie circulaire à assurer la mise en forme du faisceau au moyen d'optiques astigmatiques réalisant une divergence du faisceau émis très faible dans le plan horizontal et une divergence de l'ordre de 15° dans le plan vertical.

Une autre méthode consiste à utiliser une source de forme allongée ou une juxtaposition de plusieurs sources dans le plan vertical avec une optique non astigmatique pour la mise en forme du faisceau. Bien entendu, d'autres réalisations sont envisageables pour obtenir le même résultat.

Sur la figure 3, on a représenté le faisceau émis 41 par l'émetteur 42 et le faisceau 44 reçu par un élément sensible linéaire 45 qui est décalé par rapport à l'émetteur 42 selon la direction longitudinale du véhicule porteur.

Par exemple, le faisceau émis et la position de l'élément sensible sont tels que l'élément sensible reçoit les échos d'obstacles situés à une hauteur comprise entre 30 et 80 cm lorsqu'ils sont à une distance de 2 m. La hauteur de la trace sur le véhicule 43 est donc de 50 cm. Le faisceau émis est de préférence divergent verticalement et convergent dans le plan horizontal.

Si on définit le lobe de détection comme l'ensemble des directions de réflexion que l'élément sensible est capable de recevoir, alors, pour permettre à l'élément sensible de "voir" la tache lumineuse produite par l'émission sur le véhicule à détecter sur toute sa hauteur, il faut adapter l'ouverture angulaire du lobe de détection à l'ouverture angulaire du faisceau émis dans le plan vertical.

Cette ouverture angulaire est obtenue par des moyens optiques simples connus de l'homme de l'art dont le principe reprend celui énoncé pour la mise en forme du faisceau émis. Ici, les couvertures angulaires du lobe de détection dans les plans vertical et horizontal dépendent respectivement de la couverture angulaire du faisceau lumineux émis dans le plan vertical et de la plage de distance à couvrir dans le plan horizontal entre l'obstacle et le véhicule porteur.

A titre d'exemple, pour ne parler que de la couverture angulaire du lobe de détection dans le plan vertical, la mise en forme peut être obtenue :

- Soit en recevant le signal réfléchi sur un élément sensible unique de dimension verticale minimale (environ 1 mm) avec une optique astigmatique de manière à faire converger la totalité du lobe de détection en un point dans le plan vertical indépendamment de la convergence désirée dans le plan horizontal ;
- soit en recevant le signal réfléchi à travers une optique non astigmatique sur un élément sensible unique de forme allongée ou sur plusieurs éléments juxtaposés verticalement de sorte que la dimension verticale de la surface sensible résultante soit adaptée à la dimension verticale de la tache lumineuse produite par l'émission sur le véhicule à observer, l'optique étant alors dimensionnée de manière à répondre aux exigences de couverture angulaire dans le plan horizontal (voir la couverture en distance).

Dans cette application de l'invention, l'information de distance à l'obstacle est un élément primordial dans l'algorithme de mesure de l'espace disponible. Une analyse des valeurs relatives de la distance des obstacles permet de discriminer un véhicule stationné de l'espace libre à mesurer et aussi de s'affranchir de tout l'arrière-plan qui se trouve à une distance importante du véhicule porteur. De plus, l'information de distance permet par extrapolation ou calcul d'un coefficient correctif d'affiner la détermination de la position des extrémités des véhicules donc d'améliorer la précision de la mesure de l'espace disponible.

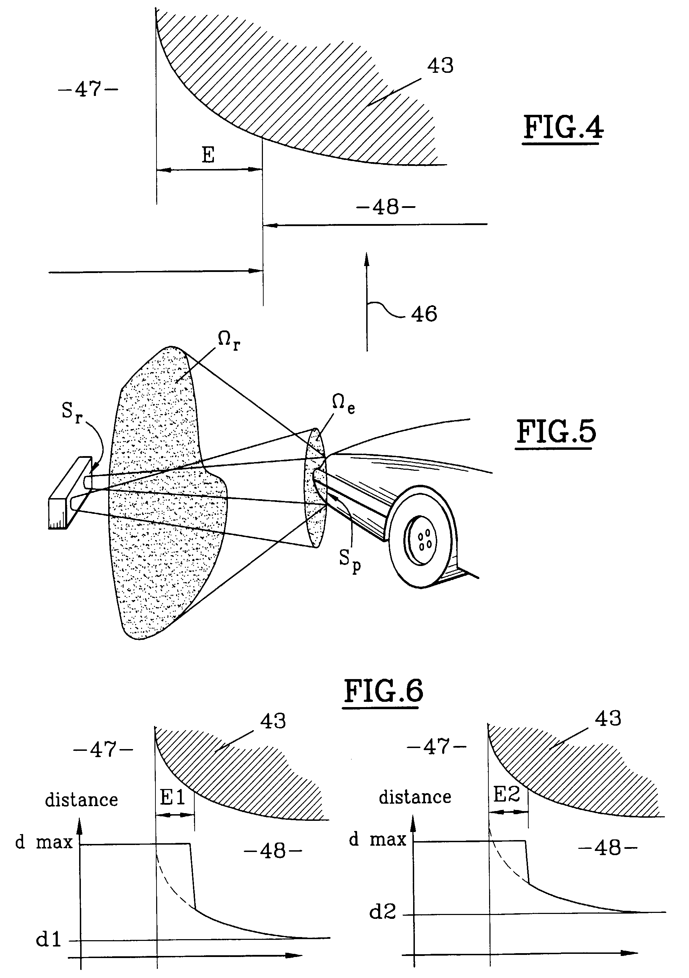

La figure 4 montre, en vue de dessus, le pare-chocs du véhicule en stationnement 43 et l'axe 46 du faisceau émis par l'émetteur 42. L'espace libre est repéré en 47.

Il existe une erreur de mesure, E, qui correspond à la zone où le pare-chocs ne peut pas être détecté du fait du trop faible signal qu'elle réfléchit en direction du récepteur, la détection ne pouvant être réalisé correctement que dans la zone 48.

Ceci est expliqué sur la figure 5 qui illustre la non-détection de la partie extrême du pare-chocs.

En effet, si on appelle Pe la puissance lumineuse émise, la puissance p reçue par l'élément sensible est déterminée par la relation :

$$P = [(Pe . Sp) / (\Omega e . d^2)] . [Sr / (\Omega r . d^2)] . \rho \theta$$

dans laquelle $\Omega e$ est l'angle solide qui correspond au faisceau émis, Sp est la surface du pare-chocs interceptée par le faisceau émis, $\Omega r$ est l'angle solide total du faisceau réfléchi par la surface Sp du pare-chocs, $\rho \theta$ est

un facteur représentatif de la répartition énergétique de signal réfléchi dans le domaine $\Omega r$ et du matériau de la surface réflectrice, Sr est la surface de la pupille de réception et d est la distance à l'obstacle.

Pour un matériau diffusant de type Lambertien, le facteur $\rho \theta$ est proportionnel à (1 - cos θ) où θ est l'angle entre la direction d'observation et (celle du récepteur) et la direction tangente à la surface réflectrice. On voit que, quand θ tend vers zéro, c'est-à-dire que l'on se rapproche de l'extrémité du pare-chocs (la direction de réception étant parallèle au bord frontal du pare-chocs), le facteur $\rho \theta$, donc la puissance du signal reçu, est minimal et tend aussi vers zéro. On comprend ainsi pourquoi il n'est pas possible de détecter la partie extrême du pare-chocs.

Par ailleurs, on voit que la puissance P reçue après réflexion sur le pare-chocs ne correspond qu'à une faible partie du signal émis Pe, car une partie seulement de ce signal intercepte effectivement le pare-chocs et celui-ci, réfléchissant ce signal dans un faisceau très ouvert, ne diffuse vers l'otique de réception qu'une part minime de l'énergie qu'il a reçue. La puissance reçue par l'élément sensible dépend ainsi de l'inverse de la puissance quatrième de la distance. Ceci explique de manière manifeste que le capteur perd le signal en provenance du pare-chocs plus tôt quand la distance avec le véhicule cible grandit.

En pratique, l'erreur de mesure E augmente quand la distance latérale à l'obstacle augmente. La figure 6 représente l'erreur de mesure sur un pare-chocs à deux distances d1 et d2 différentes (d1 et d2 étant référencées par rapport au côté de la caisse du véhicule stationné).

Le signal représentatif de la distance suit la courbe du pare-chocs dans la zone 48 jusqu'à ce qu'il ne puisse plus détecter sa présence. Au delà le signal prend une valeur erronée, ici égale à dmax, distance maximale de détection. On voit que pour une distance d2 supérieure à dl, l'erreur E2 est supérieure à l'erreur E1.

Ainsi deux solutions se présentent pour affiner la détermination de la position de l'extrémité d'un pare-chocs.

Une première solution consiste à partir du suivi en distance du profil du pare-chocs et à extrapoler la position de l'extrémité (courbes en pointillés de la figure 6). Ceci est rendu possible du fait de la relative uniformité des formes de pare-chocs dans leur partie extrême d'un modèle à l'autre des véhicules modernes.

Une deuxième solution consiste à partir de la valeur de la distance au côté de la caisse du véhicule stationné, dl ou d2 sur la figure 6 et à calculer un coefficient correctif pour compenser l'erreur E1 ou E2. En pratique, on détermine empiriquement une loi de variation de l'erreur en fonction de la distance à l'obstacle.

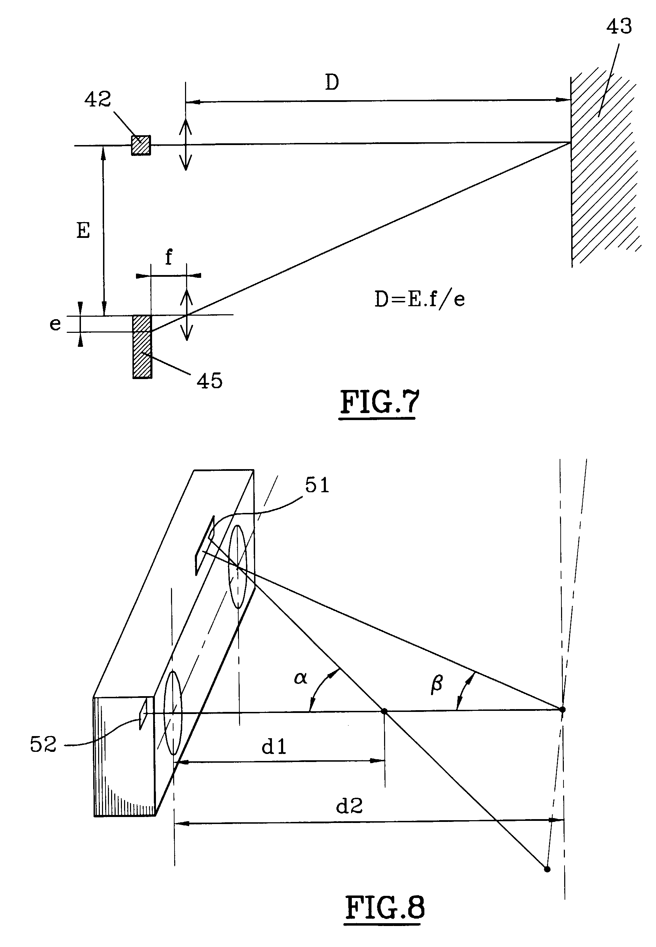

Cette distance est déterminée, de manière connue, par un principe de triangulation, comme représenté sur la figure 7. On utilise un élément récepteur 45 décalé longitudinalement par rapport à l'émetteur 42.

Le principe de triangulation repose sur la discrimination angulaire du faisceau reçu; les angles $\alpha$ et $\beta$ sont représentatifs des distances dl et d2. Cette contrainte de discrimination impose que dans le plan de triangulation, le faisceau soit parallèle et de faible dimension, c'est-à-dire que la largeur du faisceau est faible, ce qui est obtenu conformément à l'invention.

Le dispositif selon l'invention comporte un dispositif de calcul qui effectue les calculs précités, à savoir le calcul de la distance avec élimination des échos provenant d'obstacles situés au delà d'une distance maximale prédéterminée et le calcul de la longueur de l'emplacement avec prise en compte de la distance pour la détermination de l'erreur E et ainsi améliorer la précision de la mesure.

En pratique, pour réaliser la mesure de la distance à l'obstacle par triangulation, il faut couvrir dans le plan horizontal toute la plage de distance qui est intéressante jusqu'à la distance maximale prédéterminée. Pour cela, l'ouverture angulaire du lobe de détection dans le plan vertical étant importante, puisqu'elle est dimensionnée pour s'affranchir des variations de la hauteur des pare-chocs, on réalise la triangulation dans le plan horizontal où la sélectivité angulaire du faisceau émis est meilleure. Ainsi, on donne au lobe de détection une ouverture angulaire dans la plan horizontal qui va permettre d'obtenir la détection des véhicules sur toute la plage de distance transversale désirée. On obtient cette ouverture angulaire dans le plan horizontal par des moyens optiques simples connus de l'homme de l'art comme décrit précédemment.

L'élément sensible peut être constitué par une barrette horizontale ou une ligne horizontale d'éléments discrets, par exemple du type à couplage de charges (CCD) qui permet, après traitement, de retrouver la localisation de la tache image dans le plan focal de l'optique de réception, donc la distance de l'obstacle détecté.

Selon le second mode de réalisation dans lequel la forme de la zone d'observation sur le véhicule cible est imposée par la conformation du récepteur (obtenue part les mêmes moyens optiques que dans le mode de réalisation décrit précédemment), la discrimination angulaire qui va permettre de mesurer la distance à l'obstacle est réalisée par la conformation de l'émetteur.

En effet, la figure 8 illustre comment en disposant une barrette de sources élémentaires 51 longitudinalement , on va créer une série de faisceaux émis par chacune des sources qui vont chacun illuminer l'obstacle à une distance différente. La surface sensible 52 est, dans ce cas, unique et simple puisque, moyennant un dispositif de discrimination de l'émission spécifique de chacune des sources, il est possible à la réception de restituer à l'une des sources, l'émission dont on observe la réflexion sur l'obstacle au niveau de l'élément sensible 52.

La discrimination des sources peut être réalisée par plusieurs moyens, soit en séquençant les émissions respectives des sources ou en appliquant une modulation d'amplitude différente à chaque source ou encore en différenciant les fréquences de chacune des sources ou en les modulant différemment, ... etc.

La connaissance de la source émettrice permet de recueillir l'information d'angle à laquelle correspond la distance à l'obstacle détecté.

L'invention n'est pas limitée à l'exemple de réalisation décrit; le dispositif de détection selon l'invention peut par exemple être utilisé dans des systèmes anti-collisions ou, monté à l'arrière du véhicule porteur constituer un " radar de stationnement".

## Revendications

1. Dispositif de détection et/ou de localisation d'un véhicule ou obstacle voisin (2, 3, 43), porté par une paroi d'un véhicule automobile (1) et comportant un capteur constitué d'un émetteur émettant un rayonnement infrarouge sensiblement perpendiculairement à ladite paroi du véhicule porteur et d'un récepteur, caractérisé en ce que le lobe de détection du dispositif, c'est-à-dire la zone du véhicule cible dont le récepteur reçoit le rayonnement réfléchi et diffusé, est de forme allongée verticalement et de faible épaisseur horizontale, la hauteur de ce lobe de détection étant au moins égale à quelques dizaines de centimètres lorsque la distance en direction transversale entre le véhicule cible et le véhicule porteur est égale à environ 2 m.

2. Dispositif de détection et/ou de localisation selon la revendication 1, caractérisé en ce que le dispositif comporte un télémètre mesurant la distance entre le véhicule porteur et le véhicule cible et destiné à cartographier l'espace latéral au véhicule, la mesure de la distance latérale à l'obstacle visant à déterminer avec précision la position des extrémités des véhicules stationnés sur l'axe longitudinal.

3. Dispositif de détection et/ou de localisation selon la revendication 1, caractérisé en ce que l'émetteur est conformé pour émettre un faisceau divergent selon la direction verticale et convergent parallèle, ou faiblement divergent, selon la direction verticale.

4. Dispositif de détection et/ou de localisation selon la revendication 1, caractérisé en ce que le récepteur est conformé pour observer une tache sur le véhicule cible de dimension verticale importante et de faible largeur horizontale.

5. Dispositif de détection et/ou de localisation selon la revendication 3 ou 4, caractérisé en ce que l'émetteur ou le récepteur comporte un élément unique de symétrie circulaire associé à une optique astigmatique.

**6.** Dispositif de détection et/ou de localisation selon la revendication 3 ou 4, caractérisé en ce que l'émetteur ou le récepteur comporte un élément de forme allongée ou une juxtaposition de plusieurs éléments dans le plan vertical et une optique non astigmatique.

**7.** Dispositif de détection et/ou de localisation selon la revendication 1, caractérisé en ce que la hauteur du lobe de détection est égale à environ 50 cm, à 2 m.

**8.** Dispositif de détection et/ou de localisation selon la revendication 7, caractérisé en ce que le lobe de détection est situé à une hauteur par rapport au sol comprise entre environ 30 cm et 80 cm, à 2 m.

**9.** Dispositif de détection et/ou de localisation selon la revendication 1, caractérisé en ce qu'il comporte un dispositif éliminant les objets (1, 2, 43) dont la distance est supérieure à une valeur prédéterminée.

**10.** Dispositif de détection et/ou de localisation selon la revendication 1, caractérisé en ce que le récepteur est constitué par un élément sensible linéaire (45) détecteur de position fournissant deux courants dont le rapport est fonction de la position de la tache image.

**11.** Dispositif de détection et/ou de localisation selon la revendication 1, caractérisé en ce que le récepteur est constitué par une ligne horizontale d'éléments sensibles discrets, tels que, par exemple, des éléments à couplage de charges.

**12.** Dispositif de détection et/ou de localisation selon la revendication 9, destiné à déterminer la position de l'extrémité de véhicules (1, 2, 43) stationnant en ligne le long d'un trottoir (4, 5), caractérisé en ce qu'il est fixé sur un côté du véhicule porteur (1) de manière à viser avec un faisceau de rayonnement (41) dont l'axe (46) est orthogonal à l'axe longitudinal (6) du véhicule porteur (1), en ce que la valeur prédéterminée de la distance correspond à la largeur d'un véhicule, par exemple deux mètres, et en ce qu'il comporte un capteur odométrique et un dispositif de calcul (49) déterminant la longueur des emplacements libres pour le garage du véhicule porteur.

**13.** Dispositif de détection et/ou de localisation selon la revendication 12, caractérisé en ce qu'il comporte un dispositif de calcul (49) de l'erreur de mesure de la position de l'extrémité des véhicules (1, 2, 43) en fonction de la distance du véhicule détecté.

FIG.1

FIG.2

FIG.3

FIG.4

—47—

E

—48—

46

43

FIG.5

$\Omega_r$

$\Omega_e$

$S_r$

$S_p$

FIG.6

43

—47—

distance

E1

d max

—48—

d1

43

—47—

distance

E2

d max

—48—

d2

43

42

D

E

f

e

D=E.f/e

45

## FIG.7

51

52

α

β

d1

d2

## FIG.8

EP 0 735 383 A1

**Office européen des brevets**

# RAPPORT DE RECHERCHE EUROPEENNE

Numero de la demande

EP 96 40 0607

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | EP-A-0 305 907 (BAYERISCHE MOTOREN WERKE AG) 8 Mars 1989 * le document en entier * | 1 | G01S17/93 |
| A | GB-A-2 139 445 (NISSAN) 7 Novembre 1984 * abrégé; figure 13 * | 1 | |
| A | DE-A-38 44 340 (LICENTIA PATENT-VERWALTUNGS-GMBH) 5 Juillet 1990 * abrégé; figures 1-3 * | 1 | |

**DOMAINES TECHNIQUES RECHERCHES (Int.Cl.6)**

G01S
B60Q

Le présent rapport a été établi pour toutes les revendications

| Lieu de la recherche | Date d'achèvement de la recherche | Examinateur |
|---|---|---|
| LA HAYE | 1 Juillet 1996 | Zaccà, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

10